# EUROPÄISCHE PATENTSCHRIFT

(11) **EP 2 807 515 B1**
(45) Veröffentlichungstag und Bekanntmachung des Hinweises auf die Patenterteilung: **09.03.2016**
(21) Anmeldenummer: 12809201.2
(22) Anmeldetag: 13.12.2012
(51) Int. Cl.: G02B 21/16, G02B 21/36, G02B 27/58, G01N 21/64

(54) **MIKROSKOP UND VERFAHREN FÜR DIE HOCHAUFLÖSENDE 3-D FLUORESZENZMIKROSKOPIE**
MICROSCOPE AND METHOD FOR HIGH-RESOLUTION 3D FLUORESCENCE MICROSCOPY
MICROSCOPE ET PROCÉDÉ DE MICROSCOPIE À FLUORESCENCE 3D HAUTE RÉSOLUTION

(30) Priorität: 24.01.2012 DE 102012201003
(43) Veröffentlichungstag der Anmeldung: 03.12.2014
(73) Patentinhaber: Carl Zeiss Microscopy GmbH, 07745 Jena (DE)
(72) Erfinder: KALKBRENNER, Thomas, 07745 Jena (DE); WOLLESCHENSKY, Ralf, 07743 Jena (DE)
(74) Vertreter: Hampe, Holger
(86) Internationale Anmeldenummer: PCT/EP2012/075465
(87) Internationale Veröffentlichungsnummer: WO 2013/110408

(56) Entgegenhaltungen:
- WO-A1-2010/062364
- DE-A1-102009 060 490
- US-A1- 2002 154 398
- US-A1- 2007 268 592
- MATTHEW D. LEW ET AL: "<title>In vivo three-dimensional superresolution fluorescence tracking using a double-helix point spread function</title>", PROCEEDINGS OF SPIE, Bd. 7571, 11. Februar 2010 (2010-02-11), Seite 75710Z, XP055052798, ISSN: 0277-786X, DOI: 10.1117/12.842608
- C. BOURGENOT ET AL.: "Adaptive Optics for Wide-field Microsopy", SPIE, PO BOX 10 BELLINGHAM WA 98227-0010, USA, Bd. 7904, 22. Februar 2011 (2011-02-22), Seiten 790414-1-790414-7, XP040554703,

## Beschreibung

Die Erfindung bezieht sich auf ein Verfahren zur hochauflösenden 3D-Fluoreszenzmikroskopie, wobei in einer Probe wiederholt Fluoreszenzemitter zur Abgabe von Fluoreszenzstrahlung angeregt und von der Probe mit einem Mikroskop, das einen Abbildungsstrahlengang mit einer optischen Auflösung und eine Fokalebene aufweist, Einzelbilder erzeugt werden, wobei die Fluoreszenzemitter derart zur Abgabe von Fluoreszenzstrahlung angeregt werden, dass zumindest eine Teilmenge der Fluoreszenzemitter in jedem Einzelbild derart isoliert ist, so dass die Bilder dieser Fluoreszenzemitter im Rahmen der optischen Auflösung in den Einzelbildern trennbar sind, in den erzeugten Einzelbildern aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird, jedes Einzelbild mittels eines Teilerelements in ein erstes und ein zweites Teilbild aufgeteilt wird, wobei das erste Teilbild eine erste Fokalebene in der Probe und das zweite Teilbild eine zweite Fokalebene in der Probe abbildet, beide Teilbilder nebeneinander auf eine Kamera abgebildet werden.

Die Erfindung bezieht sich weiter auf ein Fluoreszenzmikroskop zum dreidimensionalen Abbilden einer Probe mit einer über eine optische Auflösung gesteigerten Ortsauflösung, das aufweist: eine Beleuchtungseinrichtung, die dazu ausgebildet ist, in der Probe wiederholt Fluoreszenzemitter zur Abgabe von Fluoreszenzstrahlung anzuregen eine einen Abbildungsstrahlengang mit der optischen Auflösung umfassende Abbildungseinrichtung, die dazu ausgebildet ist, von der Probe mit der optischen Auflösung Einzelbilder zu erzeugen, eine Steuereinrichtung, die dazu ausgebildet ist, die Beleuchtungseinrichtung und die Abbildungseinrichtung so anzusteuern, dass von der Probe mehrere Einzelbilder erzeugt werden, wobei die Fluoreszenzemitter derart zur Abgabe von Fluoreszenzstrahlung angeregt sind, dass zumindest eine Teilmenge der Fluoreszenzemitter in jedem Einzelbild derart isoliert ist, dass die Bilder dieser Fluoreszenzemitter im Rahmen der optischen Auflösung in den Einzelbildern trennbar sind, wobei die Steuereinrichtung dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen, der Abbildungsstrahlengang ein Teilerelement aufweist, das jedes Einzelbild in ein erstes und ein zweites Teilbild aufteilt, wobei das erste Teilbild eine erste Fokalebene in der Probe und das zweite Teilbild eine zweite Fokalebene in der Probe abbildet, die Abbildungseinrichtung eine Kamera umfasst, auf die beide Teilbilder nebeneinander abgebildet sind.

Im Stand der Technik sind verschiedene Verfahren zur Überwindung der Beugungsgrenze in der Mikroskopie entwickelt worden. Aus der WO 2006/127692 oder der DE 102006021317 A1 ist ein mit PALM abgekürztes Verfahren (photo activated light microscopy) bekannt, das eine Markierungssubstanz zur Abbildung einer Probe verwendet, welche z. B. mittels optischer Strahlung aktiviert werden kann. Nur im aktivierten Zustand kann die Markierungssubstanz bestimmte Fluoreszenzstrahlung abgeben. Nicht aktivierte Moleküle der Markierungssubstanz senden auch nach Einstrahlung von Anregungsstrahlung keine oder zumindest keine merkliche Fluoreszenzstrahlung ab. Man bezeichnet deshalb die Aktivierungsstrahlung allgemein als Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet ist, dass diese Markierungsmoleküle gemessen an der optischen Auflösung der Mikroskopie getrennt oder nachträglich durch Bildverarbeitungsverfahren trennbar sind. Man spricht davon, dass eine Teilmenge der Fluoreszenzemitter isoliert wird. Nach Aufnahme der Fluoreszenzstrahlung wird für diese isolierten Emitter dann das Zentrum deren auflösungsbegrenzt bedingter Strahlungsverteilung ermittelt. Daraus kann man rechnerisch die Lage der Moleküle mit höherer Genauigkeit bestimmen, als es die optische Auflösung eigentlich zulässt. Dieser Vorgang wird als Lokalisierung bezeichnet. Die gesteigerte Auflösung durch rechnerische Schwerpunktbestimmung der Beugungsverteilung wird in der englischen Fachliteratur auch als "super resolution" bezeichnet. Sie erfordert, dass in der Probe zumindest eine Teilmenge der aktivierten Markierungsmoleküle mit der optischen Auflösung unterscheidbar, also isoliert sind. Dann kann ihre Ortslage mit höherer Genauigkeit bestimmt werden, sie können lokalisiert werden.

Zum Isolieren einzelner Markierungsmoleküle nutzt das PALM-Prinzip statistische Effekte aus. Bei einem Markierungsmolekül, das nach Empfang des Umschaltsignals gegebener Intensität zur Fluoreszenzstrahlung anregbar ist, kann durch Einstellen der Intensität des Umschaltsignals dafür gesorgt werden, dass die Wahrscheinlichkeit in einem gegebenen Flächenbereich der Probe vorhandene Markierungsmoleküle zu aktivieren, so gering ist, dass es ausreichend Teilbereiche gibt, in denen innerhalb der optischen Auflösung nur unterscheidbare Markierungsmoleküle Fluoreszenzstrahlung emittieren.

Das PALM-Prinzip wurde hinsichtlich der Aktivierung der zu erfassenden Moleküle weitergebildet. So ist beispielsweise bei Molekülen, die einen langlebigen nicht fluoreszierenden und einen kurzlebigen fluoreszierenden Zustand aufweisen, ein separates Aktivieren mit spektral von der Anregungsstrahlung sich unterscheidender Aktivierungsstrahlung gar nicht erforderlich. Vielmehr wird die Probe zuerst mit Beleuchtungsstrahlung hoher Intensität so aktiviert, dass der weit überwiegende Anteil der Moleküle in den nicht fluoreszenzfähigen langlebigem Zustand (z. B. einen Triplet-Zustand) gebracht werden. Die verbleibenden, dann noch fluoreszierenden Moleküle sind dadurch hinsichtlich der optischen Auflösung isoliert.

Es sei auch noch angemerkt, dass das PALM-Prinzip in der Fachliteratur mittlerweile auch andere Abkürzungen erhalten hat, wie beispielsweise STORM etc. In dieser Beschreibung wird die Abkürzung PALM für alle Mikroskopieaufnahmen verwendet, die eine Ortsauflösung über die optische Auflösung der verwendeten Apparatur hinaus erreichen, indem Fluoreszenzmoleküle zuerst isoliert und dann lokalisiert werden. Das PALM-Verfahren hat den Vorteil, dass für die Beleuchtung keine hohe Ortsauflösung benötigt wird. Eine einfache Weitfeldbeleuchtung ist möglich.

Das PALM-Prinzip erfordert es, dass viele Einzelbilder der Probe aufgenommen werden, die jeweils Teilmengen aus isolierten Molekülen enthalten. Um die Probe zur Gänze abzubilden, muss die Menge aller Einzelbilder sicherstellen, dass möglichst alle Moleküle mindest einmal in einer Teilmenge enthalten waren. Das PALM-Verfahren benötigt deshalb regelmäßig eine Vielzahl von Einzelbildern, was eine gewisse Dauer für die Aufnahme eines Gesamtbildes bedingt. Damit ist ein erheblicher Rechenaufwand verbunden, da in jedem Einzelbild rechnerisch eine Vielzahl von Molekülen lokalisiert werden muss. Es fallen große Datenmengen an.

Diese Lokalisierungsgenauigkeit wird durch die Lokalisierung in Einzelbildern lediglich lateral erreicht, also in einer Ebene, die der Bildebene der Kamera zugeordnet ist. Die Verfahren sind also in dieser Hinsicht auf eine zweidimensionale Probenanalyse beschränkt. Man kombiniert das PALM-Prinzip deshalb mit einer TIRF-Anregung, welche sicherstellt, dass nur Fluorophore aus einer dünnen Schicht der Probe emittieren.

Zur Lokalisierung lumineszierender Markierungsmoleküle in der dritten Raumrichtung, welche bezogen auf die Abbildung der Probe die Tiefenrichtung ist, sind aus dem Stand der Technik ebenfalls Ansätze bekannt. Unter "Tiefenrichtung" wird dabei die Richtung längs des Lichteinfalls, also längs der optischen Achse verstanden.

Die Publikation B. Huang et al., Science 319, Seite 810, 2008, beschreibt für das PALM-Prinzip einen Abbildungsstrahlengang, in dem eine schwache Zylinderlinse liegt, die zu einer gezielten astigmatischen Verzeichnung führt. Dadurch wird das Bild des Moleküls auf der Kamera elliptisch verzerrt, sobald sich das Molekül ober- oder unterhalb der Fokalebene, also des Symmetriepunktes der Punktbildverwaschungsfunktion befindet. Aus der Orientierung und der Stärke der Verzerrung lässt sich die Information über die Tiefenlage des lumineszierenden Markierungsmoleküls gewinnen. Ein Nachteil dieses Verfahrens liegt darin, dass auch die lokale Umgebung und die Orientierung eines molekularen Dipols zu einer Verzerrung des Bildes des lumineszierenden Markierungsmoleküls führen können, die mit der Tiefenlage nichts zu tun hat. Solchen lumineszierenden Markierungsmolekülen wird dann, je nach ihrer Orientierung, ein falscher Tiefenwert zugeordnet.

Die Veröffentlichung Pavani et al., PNAS 106, Seite 2995, 2009, schlägt vor, die Punktbildverwaschungsfunktion durch einen räumlichen Phasenmodulator in der Abbildung zu einer Doppelhelixstruktur zu modifizieren. Die Punktbilder einzelner, lumineszierender Markierungsmoleküle werden dann zu Doppelspots, ihre Tiefenlage ist in der Winkelorientierung der gemeinsamen Achse der Doppelspots kodiert.

Gemäß der Veröffentlichung von Shtengel et al., PNAS 106, Seite 3125, 2009, werden von den lumineszierenden Markierungsmolekülen emittierten Photonen mit sich selbst zur Interferenz gebracht. Dazu werden zwei in 4π-Konfiguration montierte Objektive verwendet, welche die lumineszierenden Markierungsmoleküle gleichzeitig beobachten. Die derart gewonnenen Teilstrahlengänge werden mittels eines speziellen Drei-Wege-Strahlteilers zur Interferenz gebracht. Jedes der damit erhaltenen Dreipunktbilder wird mit einer Kamera detektiert. Die Intensitätsverhältnisse der Dreipunktbilder geben Aufschluss über die Tiefenlage.

Die Publikationen Toprak et al., Nanolet. 7, Seiten 3285-3290, 2007 sowie Juette et al., Nature Methods 5, Seite 527, 2008, beschreiben einen Ansatz, bei dem ein 50/50-Strahlteiler in den Abbildungsstrahlengang eingebaut wird, der das Abbild der Probe in zwei Teilbilder aufspaltet. Diese zwei Bilder werden eigenständig detektiert. Zusätzlich wird in einem der damit erhaltenen Teilstrahlengänge eine optische Weglängendifferenz dergestalt eingeführt, dass sich aus den beiden Teilstrahlengänge zwei Objektebenen ergeben, die etwa um die halbe oder ganze optische Mindestauflösung (beispielsweise 700 nm) in z-Richtung, also Tiefenrichtung, auseinanderliegen. Die Tiefenposition von Markierungsmolekülen, die zwischen diesen beiden Ebenen liegen, ergibt sich nun durch Analyse der zwei Teilbilder desselben Markierungsmoleküls (z. B. hinsichtlich der Breite des Punktverwaschungsbildes, was durch eine Art Subtraktion erfolgen kann) oder durch entsprechendes Fitten einer dreidimensionalen Punktbildverwaschungsfunktion. Das Verfahren erfordert zwei hochaufgelöste Teilbilder und eine präzise Justage der Strahlengänge und Kalibriermessungen, um eine sub-pixelgenaue Überlagerung der beiden Teilbilder zu erreichen. Weiter sind die beiden Teilbilder eines Markierungsmoleküls in der Regel von unterschiedlicher Form, da sich die laterale Ausdehnung der Punktbildverwaschungsfunktion eines abbildenden Systems in Abhängigkeit von der Lage der betrachteten Objektebene ändert.

Die DE 102009060490 A1, welche im übrigen weitere Literaturnachweise zur 3D-Hochauflösung aufführt, verfolgt ebenfalls den gattungsgemäßen Ansatz gemäß Toprak et al., das Abbild der Probe in zwei Teilbilder aufzuspalten.

Die US 2002154398 A1 bezieht sich auf die Erweiterung gängiger Mikroskope um einen oder mehrere Wellenfrontmodulatoren im Beobachtungs- und/oder Beleuchtungsstrahlengang eines Mikroskops. Der/die Modulator(en) verändern die Phase und/oder die Amplitude des Lichtes gezielt derart, dass sowohl eine Verschiebung und Formung des Fokus im Objektraum, als auch eine Korrektur von eventuellen Aberrationen bewirkt wird. Die möglichen Einsatzgebiete umfassen die konfokale Mikroskopie, die lasergestützte Mikroskopie, die konventionelle Lichtmikroskopie und die analytische Mikroskopie.

Die US 2007268592 A1 offenbart ein System und ein Verfahren zur Korrektur von optischen Aberrationen in optischen Vorrichtungen, wie beispielsweise Weitfeldmikroskopen, optische Pinzetten und optischen Medien, wie zum Beispiel DVD-Laufwerke. Das System verwendet adaptive Optiken, um optische Aberrationen, wie sphärische und raumvariante Aberrationen zu korrigieren. Sphärische Aberrationen können durch Nutzung eine adaptiven optischen Elements korrigiert werden und raumvariante Aberrationen können durch Nutzung zahlreicher hintereinander angeordneter adaptiver optischer Elemente korrigiert werden. Die adaptiven optischen Elemente können verschiedener Art sein, wie Flüssigkristall-Linsen, verformbare Membran-Spiegel oder verschiedene Flüssigkristallphasen und Amplitudenmodulatoren. Adaptive Optiken können auch verwendet werden, um gleichzeitig den Fokus der optischen Vorrichtung zu verschieben und optische Aberrationen zu korrigieren.

Der Erfindung liegt die Aufgabe zugrunde, ein solches Verfahren dahingehend zu verbessern, daß der Aufbau vereinfacht und Justieranforderungen einfach zu erfüllen sind.

Die Aufgabe wird gelöst durch ein Verfahren zur hochauflösenden 3D-Fluoreszenzmikroskopie gemäss Anspruch 1,
wobei in einer Probe wiederholt Fluoreszenzemitter zur Abgabe von Fluoreszenzstrahlung angeregt und von der Probe mit einem Mikroskop, das einen Abbildungsstrahlengang mit einer optischen Auflösung und eine Fokalebene aufweist, Einzelbilder erzeugt werden, wobei die Fluoreszenzemitter derart zur Abgabe von Fluoreszenzstrahlung angeregt werden, daß zumindest eine Teilmenge der Fluoreszenzemitter in jedem Einzelbild derart isoliert ist, so daß die Bilder dieser Fluoreszenzemitter im Rahmen der optischen Auflösung in den Einzelbildern trennbar sind, in den erzeugten Einzelbildern aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird, jedes Einzelbild mittels eines Teilerelements in ein erstes und ein zweites Teilbild aufgeteilt wird, wobei das erste Teilbild eine erste Fokalebene in der Probe und das zweite Teilbild eine zweite Fokalebene in der Probe abbildet, beide Teilbilder auf mindestens eine Kamera abgebildet werden, bei dem als Teilerelement ein adaptiver Spiegel verwendet und im wesentlichen in einer Pupille des Abbildungsstrahlengangs angeordnet wird, der adaptive Spiegel so eingestellt wird, daß er die zwei Teilbilder örtlich getrennt abbildet, und der adaptive Spiegel so eingestellt wird, daß er zwei unterschiedliche Fokuslängen für die beiden Teilbilder realisiert, und der adaptive Spiegel die zwei Teilbilder entlang divergierender optischer Achsen auf nebeneinanderliegende Bildaufnahmebereiche abbildet.

Die Aufgabe wird ebenfalls gelöst durch ein Fluoreszenzmikroskop zum dreidimensionalen Abbilden einer Probe mit einer über eine optische Auflösung gesteigerten Ortsauflösung gemäss Anspruch 8 das aufweist: eine Beleuchtungseinrichtung, die dazu ausgebildet ist, in der Probe wiederholt Fluoreszenzemitter zur Abgabe von Fluoreszenzstrahlung anzuregen eine einen Abbildungsstrahlengang mit der optischen Auflösung umfassende Abbildungseinrichtung, die dazu ausgebildet ist, von der Probe mit der optischen Auflösung Einzelbilder zu erzeugen, eine Steuereinrichtung, die dazu ausgebildet ist, die Beleuchtungseinrichtung und die Abbildungseinrichtung so anzusteuern, dass von der Probe mehrere Einzelbilder erzeugt werden, wobei die Fluoreszenzemitter derart zur Abgabe von Fluoreszenzstrahlung angeregt sind, dass zumindest eine Teilmenge der Fluoreszenzemitter in jedem Einzelbild derart isoliert ist, dass die Bilder dieser Fluoreszenzemitter im Rahmen der optischen Auflösung in den Einzelbildern trennbar sind, wobei die Steuereinrichtung dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen, der Abbildungsstrahlengang ein Teilerelement aufweist, das jedes Einzelbild in ein erstes und ein zweites Teilbild aufteilt, wobei das erste Teilbild eine erste Fokalebene in der Probe und das zweite Teilbild eine zweite Fokalebene in der Probe abbildet, die Abbildungseinrichtung mindestens eine Kamera umfasst, auf die beide Teilbilder abgebildet sind, bei dem das Teilerelement als adaptiver Spiegel ausgebildet ist, der im wesentlichen in einer Pupille des Abbildungsstrahlengangs angeordnet ist, die Steuereinrichtung dazu ausgebildet ist, den adaptiven Spiegel so einzustellen, dass er die zwei Teilbilder örtlich getrennt abbildet, und die Steuereinrichtung dazu ausgebildet ist, den adaptiven Spiegel so einzustellen, dass er zwei unterschiedliche Fokuslängen für die beiden Teilbilder realisiert, und die Steuereinrichtung dazu ausbildet ist, den adaptiven Spiegel so anzusteuern, dass er die zwei Teilbilder entlang divergierender optischer Achsen und auf nebeneinanderliegende Bildaufnahmebereiche auf der Kamera abbildet.

Erfindungsgemäß wird als strahlteilendes Element ein adaptiver Spiegel verwendet. Er hat eine Doppelfunktion, da er sowohl die Teilbilder räumlich trennt, als sie auch unterschiedlichen Fokalebenen zuordnet. Dies reduziert den Justieraufwand, der im Stand der Technik kennzeichnend für das von der Erfindung verwendete Prinzip war.

Dieses liegt darin, für jedes Einzelbild mindestens zwei Teilbilder zu erzeugen, welche unterschiedlichen Fokusebenen in der Probe zugeordnet sind. In den Teilbildern erscheinen dann die Punkt-Bilder der isolierten Fluorophore mit einer Größe, welche von der Tiefenlage des Fluorophors abhängt. Befindet sich das Fluorophor beispielsweise in der Fokusebene eines Teilbildes, ist das Punkt-Bild des Fluoreszenzemitters so klein, wie es die Beugungsbegrenzung zulässt. Mit zunehmendem Abstand zur Fokusebene wächst das Punkt-Bild bei ansonsten gleicher Geometrie. Die Größe des Punkt-Bildes eines Fluoreszenzemitters kodiert den Abstand zur Fokusebene. Unbekannt ist es jedoch, ob der Fluoreszenzemitter sich über oder unter der Fokusebene befindet. Deshalb werden in dem von der Erfindung verfolgten Prinzip mindestens zwei Teilbilder für zwei unterschiedliche Fokusebenen in der Probe erzeugt, um nicht nur den Abstand von der Fokusebene, sondern auch die absolute Lage zur Fokusebene bestimmen zu können. Die zwei Teilbilder können gleichzeitig auf zwei Bildaufnahmebereiche oder nacheinander auf eine Kamera abgebildet werden.

Der adaptive Spiegel hat gegenüber den im Stand der Technik verwendeten Konzepten weiter den Vorteil einer hohen Lichteffizienz. Verluste, wie sie an Strahlteilern etc. im Stand der Technik auftreten, kennt die erfindungsgemäße Lösung nicht. Darüber hinaus kann der Abstand der Fokusebenen der beiden Teilbilder über einen weiten Bereich verstellt werden, ohne dass eine aufwendige mechanische Betätigung von strahlwegumlenkenden Elementen etc. von Nöten wäre. Auch erlaubt es der Spiegel, die Teilbilder in rascher Folge auf eine Kamera abzubilden, da ein schneller Brennweitenwechsel realisiert werden kann.

Zur gleichzeitigen Erzeugung der beiden Teilbilder werden Teile der Spiegelfläche des adaptiven Spiegels mit einer leicht anderen Brennweite und einer gegenüber den restlichen Elementen verkippten Winkel eingestellt. Letzteres führt zur gewünschten lateralen Versetzung und der nebeneinanderliegenden Abbildung der beiden Teilbilder auf der Kamera.

Zusätzlich lässt sich durch Auswahl der Spiegelflächenanteile einstellen, mit welchem Intensitätsverhältnis die beiden Teilbilder erzeugt werden.

Da die räumliche Separation der beiden (gleichzeitig erzeugten) Teilbilder, d. h. die Divergenz ihrer optischen Achsen, wie auch die unterschiedlichen Fokuslängen lediglich durch geeignete Ansteuerung des adaptiven Spiegels bewirkt wird, ist es einfach, die gegenseitige Justierlage der beiden Teilbilder festzustellen bzw. vorzugeben. Wie bereits erwähnt, müssen die beiden Teilbilder sub-pixelgenau zueinander justiert sein, damit die gewünschte Hochauflösung mit Tiefenangabe erreicht werden kann.

Ein besonders einfaches Vorgehen zur Justierung der Teilbilder liegt darin, diese zuerst mit gleicher Fokuslänge zu erzeugen. Es liegen dann auf der Kamera nebeneinander zwei identische Teilbilder, d. h. das Einzelbild wird zweimal nebeneinander auf die Kamera abgebildet. In diesem Zustand ist es einfach möglich, die Referenzkoordinaten für die beiden Teilbilder zu gewinnen. Dazu muss lediglich eine Struktur in der Probe mit der erforderlichen Hochauflösung in beiden Teilbildern erfasst werden. Die Koordinaten des damit hochaufgelöst ermittelten Fluoreszenzemitters liefern einfach die Relativlagen der beiden Teilbilder auf der Kamera. Nachdem die Justierung derart durchgeführt wurde, wird der Spiegel so angesteuert, dass die unterschiedlichen Fokallängen realisiert werden. Die Justierlage der Teilbilder ändert sich dabei nicht, so dass die zuvor ermittelte Relativangabe der Koordinaten in den beiden Teilbildern weiterhin Gültigkeit hat.

Alternativ oder zusätzlich ist es zur Justierung auch möglich, die beiden Teilbilder zuerst superpositioniert auf die Kamera abzubilden und in diesem Zustand lagezujustieren. Dann wird der Spiegel so verstellt, dass die beiden Teilbilder nebeneinander zu liegen kommen. Ggf. können dabei wiederum Strukturelemente ausgewertet werden.

Unter "Lagejustierung" wird hier verstanden, dass eine Koordinatenangabe ermittelt wird, die es erlaubt, einen Punkt im ersten Teilbild auch im zweiten Teilbild aufzufinden. Im einfachsten Fall kann es sich um eine Relativkoordinate handeln.

Die Verwendung des adaptiven Spiegels erlaubt es einfach, die Differenz der Fokuslängen zu verändern, wodurch die Tiefenauflösung bzw. der erfasste Tiefenbereich einfach einstellbar ist.

Um die Intensitätsverhältnisse der Teilbilder einzustellen, werden einfach die Spiegelflächenanteile des adaptiven Spiegels, die die Abbildung des ersten Teilbildes bewirken, verkleinert und um dieses Maß die Spiegelflächenanteile, welche die Abbildung des zweiten Teilbildes bewirken, vergrößert.

Der adaptive Spiegel erlaubt es besonders einfach, Abbildungsfehler des Abbildungsstrahlenganges zu korrigieren. Dazu ist es zweckmäßig, am Spiegel reflektierte Strahlung (auch) mit einem Wellenfrontsensor zu erfassen.

Als adaptiver Spiegel kommen insbesondere Spiegel mit segmentierter Oberfläche oder kontinuierliche, sogenannte Membranspiegel in Frage, wie sie dem Fachmann bekannt sind, beispielsweise aus der Veröffentlichung www.bostonmicromachines.com/light-modulator.htm oder www.imagine-optic.com. Ein Überblick über adaptive Spiegel findet sich weiter in http://en.wikipedia.org/wiki/Deformable_mirror.

Bevorzugt wird der adaptive Spiegel mit einem Wellenfrontsensor kombiniert, der die Wellenfront der Strahlung, welche am Spiegel reflektiert wurde, erfasst. Damit werden optional Abbildungsfehler des Mikroskops oder Abbildungsfehler, die durch die Probe bewirkt werden korrigiert. Darüber hinaus ist eine Verschiebung der Fokusebene innerhalb gewisser Grenzen unproblematisch möglich, ohne dass das Mikroskopobjektiv verstellt werden müsste. Mechanische Störungen der Probe durch Bewegungen des Mikroskopobjektives können dadurch vermieden werden.

Unter dem Bild eines Fluoreszenzemitters ist dessen in der Regel beugungsbegrenztes Punkt-Bild gemeint.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Soweit in dieser Beschreibung Verfahrensmerkmale erwähnt sind, werden sie im Betrieb des Mikroskops durch ein entsprechend ausgebildetes Steuergerät realisiert. Analog gilt eine Offenbarung von funktionellen Merkmalen des Steuergerätes auch als Beschreibung entsprechender Verfahrensmerkmale, z. B. Schritte.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines Mikroskops zur tiefenaufgelösten und hochaufgelösten Fluoreszenzmikroskopie,
- Fig. 2 und 3: Teilbilder, die beim Betrieb des Mikroskops 1 zur Tiefenauflösung erzeugt werden, und
- Fig. 4: eine Schemadarstellung der Wirkungsweise eines adaptiven Spiegels im Abbildungsstrahlengang des Mikroskops der Fig. 1.

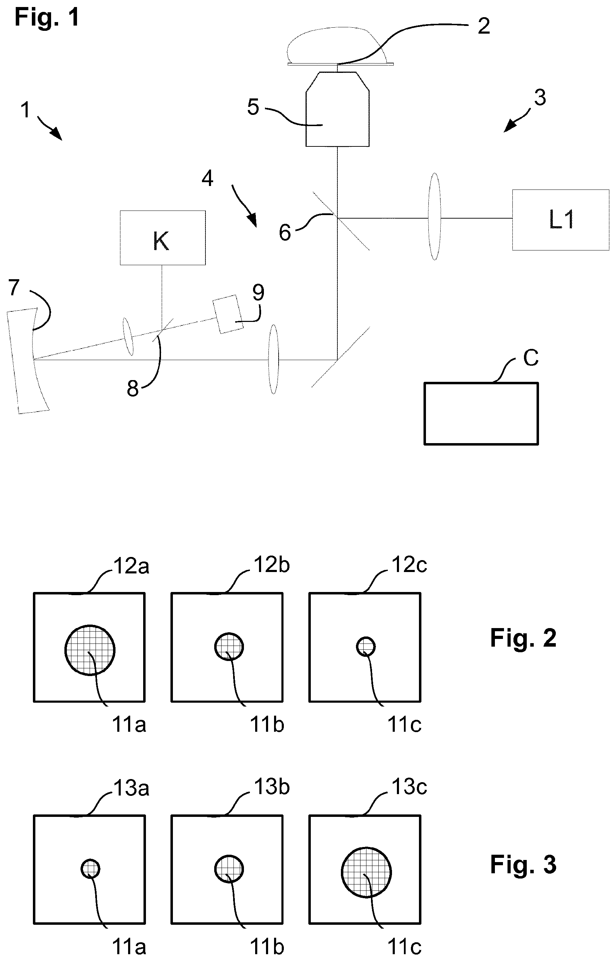

Die Figur 1 zeigt schematisch ein Fluoreszenzmikroskop 1, dessen Betrieb von einem Steuergerät C gesteuert wird. Es ist über nicht gezeigte Verbindungen mit den Elementen bzw. Bauteilen des Mikroskops 1 verbunden. Das Mikroskop 1 ist dazu eingerichtet, Fluoreszenzmikroskopie nach dem PALM-Prinzip etc. auszuführen. Es umfasst einen Beleuchtungsstrahlengang 3, sowie einen Abbildungsstrahlengang 4, die über ein gemeinsames Objektiv 5 eine Probe 2 beleuchten und die fluoreszierende Probe abbilden. Der Beleuchtungsstrahlengang 3 ist mit dem Abbildungsstrahlengang 4 über einen in der Regel dichroitisch ausgestalteten Strahlteiler 6 zusammengefasst, so dass sowohl der Beleuchtungsstrahlung aus dem Beleuchtungsstrahlengang 3 durch das Objektiv 5 zur Probe fällt, als auch die Abbildung der Probe durch das Objektiv 5 erfolgt. Der Beleuchtungsstrahlengang 3 kann mehrere Spektralkanäle aufweisen, in der Darstellung der Figur 1 ist exemplarisch nur eine Laserquelle L1 dargestellt. Der Beleuchtungsstrahlengang beleuchtet die Probe so, dass Fluoreszenzstrahlung in der Probe 2 angeregt wird. Je nach Ausgestaltung des PALM-Prinzips kann zusätzlich noch eine Anregungsstrahlenquelle in den Beleuchtungsstrahlengang 3 eingekoppelt werden.

Die Probe 2 gibt Fluoreszenzstrahlung ab, und im Abbildungsstrahlengang 4 wird das Bild der fluoreszierenden Probe 2 auf eine hochauflösende Kamera K geleitet. Die Auflösung von Objektiv 5, Abbildungsstrahlengang 4 und Kamera K ist so gewählt, dass ein beugungsbegrenztes Punkt-Bild eines einzelnen Fluoreszenzemitters auf mehrere Pixel fällt. Dies ermöglicht das für das eingangs geschilderte PALM-Prinzip erforderliche Lokalisieren eines Fluoreszenzemitters mit einer lateralen Ortsgenauigkeit, welche über die optische Auflösung von Mikroskop 5 und Abbildungsstrahlengang 4 hinausgeht.

Natürlich kann das Mikroskop 1 auch mit mehreren Farbkanälen ausgestaltet werden. Dann sind im Abbildungsstrahlengang 4 mehrere Kameras vorgesehen, die über geeignete Strahlteiler in den Strahlengang gekoppelt sind.

Der Abbildungsstrahlengang 4 umfasst neben nicht näher bezeichneten optischen Elementen, die für das Mikroskop 1 nicht weiter charakteristisch und im übrigen fachüblich sind, einen adaptiven Spiegel 7, dessen Spiegelfläche gekrümmt ist, und der Teil des Abbildungsstrahlenganges 4 ist. Er bündelt die Strahlung von der fluoreszierenden Probe 2 in Richtung auf die Kamera K. Seine Funktion wird noch erläutert werden.

Der adaptive Spiegel wird durch das Steuergerät C angesteuert, das die Geometrie der Spiegelfläche einstellt. Ein über einen Strahlteiler in den Abbildungsstrahlengang 4 geschalteter Wellenfrontsensor 9 dient dem Steuergerät C dabei dazu, die aktuelle Spiegelwirkung möglichst genau erfassen zu können. Er steigert damit die Genauigkeit, ist aber nicht zwingend erforderlich.

Das Steuergerät C steuert das Mikroskop 1 so an, dass das PALM-Prinzip ausgeführt wird. Die Probe 2 wird also vom Beleuchtungsstrahlengang 2 so beleuchtet, dass Fluoreszenzemitter in der Probe 2 isoliert sind, d. h. innerhalb der optischen Auflösung getrennt werden können. Es wird eine Vielzahl an Einzelbildern aufgenommen, die jeweils unterschiedliche Teilmengen der Fluoreszenzemitter in der Probe 2 isoliert beinhalten. In den Einzelbildern wird dann mittels bekannter mathematischer Algorithmen vom Steuergerät C für jeden isolierten Fluoreszenzemitter dessen Lage hochgenau bestimmt, so dass eine über die optische Auflösung der Abbildung hinausgehende Ortsgenauigkeit erreicht wird. Dies wird in der Literatur als sogenannte Hochauflösung oder super resolution bezeichnet.

Das PALM-Prinzip erlaubt eine hochgenaue laterale Lokalisierung von Fluoreszenzemittern, d. h. die Erfassung der Lage senkrecht zur optischen Achse. Inwieweit ein Fluoreszenzemitter sich in einer Fokalebene, vor oder hinter einer Fokalebene befindet, also die Tiefenlage des Fluoreszenzemitters, wird durch das PALM-Prinzip nicht mit höherer Genauigkeit angegeben, als bei anderen Weitfeldmikroskopen auch.

Um in dieser Hinsicht eine bessere Auflösung zu erreichen, also eine Tiefenangabe für die lateral lokalisierten Fluoreszenzemitter zu schaffen, wird das Mikroskop 1 unter Steuerung durch das Steuergerät C so betrieben, dass jedes Einzelbild, in dem die laterale Lokalisierung erfolgt, in zwei Teilbilder aufgeteilt wird, die unterschiedlichen Fokusebenen in der Probe 2 zugeordnet sind. Die Figuren 2 und 3 zeigen diese Teilbilder 12 und 13. Dabei ist das Teilbild 12 ein Einzelbild, das eine Fokusebene abbildet, die bezogen auf die Lichteinfallsrichtung, d. h. die optische Achse, höher liegt, als das Teilbild 13.

Die Figuren 2 und 3 zeigen verschiedene Zustände a, b, c für die Teilbilder 12 und 13, und enthalten exemplarisch lediglich einen einzigen Fluoreszenzemitter. Die Teilbilder 12a und 13a zeigen dabei einen Zustand, in dem ein Fluoreszenzemitter so liegt, dass er in der Fokusebene ist, die dem Teilbild 13 zugeordnet ist. Folglich ist das Bild 11a des Fluoreszenzemitters im Teilbild 13a ein beugungsbegrenzter Spot, dessen Größe durch die Beugungsgrenze vorgegeben ist. Denselben Spot findet man auch in Teilbild 12a, jedoch ist das Bild 11a hier größer ausgedehnt, da der abgebildete Fluoreszenzemitter sich nicht in der Fokusebene des Teilbildes 12 befindet. Dies führt zu einer Defokussierung, die das Bild 11a vergrößert. Der Vergleich der Bilder 11a im Teilbild 12a und 13a zeigt deutlich die Tiefenlage des Fluoreszenzemitters, nämlich in der Fokusebene des Teilbildes 13.

Das Steuergerät C kann deshalb aus der Größe der Punkt-Bilder der Fluoreszenzemitter und dem Vergleich der Teilbilder eine entsprechende Tiefenangabe für die Fluoreszenzemitter ableiten. Die laterale Lokalisierung wird wie bekannt aus dem Punkt-Bild 11a gewonnen.

Die Teilbilder 12b und 13b zeigen einen Zustand, in dem sich ein Fluoreszenzemitter zwischen den Fokusebenen der Teilbilder befindet. Dies ist daran zu erkennen, dass das Punkt-Bild 11 b dieses Fluoreszenzemitters eine Größe aufweist, die über dem beugungsbegrenzten Mindestmaß liegt, jedoch auch unter dem Maß, das sich ergäbe, wenn der Fluoreszenzemitter in der Fokusebene des Teilbildes 13 angeordnet wäre.

Die Teilbilder 12c und 13c zeigen schließlich einen Zustand, der zu dem Zustand a invertiert ist.

Das Konzept, durch Teilbilder aus unterschiedlichen Fokusebenen nicht nur eine Relativlage der Fluoreszenzemitter zur Fokusebene eines Bildes zu gewinnen, sondern auch die Richtung der Verschiebung gegenüber der Fokusebene, ist im Stand der Technik, wie eingangs geschildert wurde, bekannt.

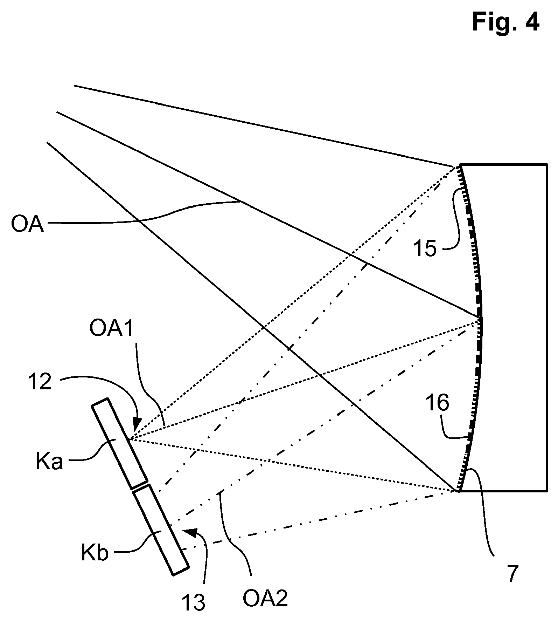

Das Fluoreszenzmikroskop 1 erreicht die Teilbilder 12 und 13 durch Einsatz des adaptiven Spiegels 7. Dieser bewirkt sowohl die Aufteilung der Abbildung der Probe 2 in die zwei Teilbilder 12, 13, als auch die Zuordnung zu unterschiedlichen Fokuslagen durch unterschiedliche Brennweiten für die Teilbilder 12, 13. Dies ist schematisch in Figur 4 dargestellt. Sie zeigt den adaptiven Spiegel 7, auf den die Strahlung von der Probe 2 längs einer optischen Achse OA einfällt. Die reflektierende Fläche des Spiegels 7 ist in Segmente 15 und 16 aufgeteilt bzw. wird durch die Ansteuerung durch das Steuergerät 10 in solche Segmente unterteilt. Der adaptive Spiegel wirkt als Strahlteiler, der das beugungsbehaftete Einzelbild der Probe 2 im Abbildungsstrahlengang 4 in die zwei Teilbilder 12 und 13 aufteilt. Weitere abbildende Elemente wie Linsen etc. können dabei verwendet werden, sind in der Darstellung der Figur 4 der besseren Übersichtlichkeit halber jedoch nicht eingetragen.

Der adaptive Spiegel 7 wird so eingestellt, dass er Spiegelflächensegmente 15 aufweist, welche die optische Achse OA in eine erste Richtung ablenken. Dazu verschachtelt liegende Spiegelflächensegmente 16 lenken die optische Achse OA in eine zweite Richtung. Dabei ist die erste Richtung eine optische Achse OA1, die dem Kamerabildbereich Ka zugeordnet ist, und die zweite Richtung entspricht einer optischen Achse OA2, welche dem Kamerabildbereich Kb zugeordnet ist. Die entsprechenden Randstrahlen für die Abbildung durch die ersten Spiegelflächensegmente 15 ist dabei wie die optische Achse OA1 gepunktet in Figur 4 eingetragen, die Randstrahlen und die optische Achse OA2, welche durch die Spiegelflächensegmente 16 auf den Kamerabildbereich Kb geleitet werden, sind strichpunktiert gezeichnet.

Weiter bewirken die Spiegelflächensegmente 15 einen Brennweitenunterschied im erzeugten Teilbild 12. Der adaptive Spiegel 7 ist somit so eingestellt, dass er nicht nur eine Bildteilung erzeugt, sondern auch beide Teilbilder 12 und 13 unterschiedlichen Fokusebenen in der Probe 2 zuordnet. Dies ist dadurch zu erkennen, dass die Randstrahlen für das Teilbild 12 sich auf der optischen Achse OA im Kamerabildbereich Ka treffen, wohingegen die strichpunktierten Randstrahlen für das Teilbild 13 am Kamerabildbereich Kb noch aufgeweitet sind.

Die Kamerabildbereiche Ka und Kb sind bevorzugt aber nicht zwingend Bildbereiche ein und derselben Kamera K. Dies hat den Vorteil, dass eine sub-pixelgenaue Justierung der Teilbilder 12 und 13 einfach möglich ist. Hierzu bieten sich u. a. folgende Optionen:
1. In einem dem eigentlichen Messverfahren vorgelagerten Justierschritt wird der adaptive Spiegel 7 so eingestellt, dass die Teilbilder 12 und 13 entlang divergierender optischer Achsen OA1 und OA2 erzeugt werden, jedoch mit derselben Brennweite des Spiegels 7. Die Teilbilder 12 und 13 entstammen dann während des Justierschrittes derselben Fokusebene. Die hochauflösende laterale Lokalisierung einer oder mehrerer Strukturen in den Teilbildern 12 und 13 erlaubt es dann einfach, eine Referenzangabe zu gewinnen, mit der im späteren Messbetrieb Strukturen im Teilbild 12 auf das Koordinatensystem des Teilbildes 13 umgerechnet werden und umgekehrt.
2. Sind die Kamerabildbereiche Ka und Kb Bildbereiche ein und derselben Kamera, können die Teilbilder 12 und 13 zuerst superpositioniert, d. h. in Überlagerung dargestellt werden. Der Spiegel 7 wird dazu so eingestellt, dass die optischen Achsen OA1 und OA2 zusammenfallen, der Winkelunterschied zwischen den Spiegelsegmenten 15 und 16 also nicht mehr gegeben ist. In dieser Überlagerung kann einfach sichergestellt werden, dass trotz unterschiedlicher Brennweiten der Segmente 15 und 16 die Bilder übereinander liegen. Auch kann eine Referenzierung der Bilder zueinander einfach durchgeführt werden. Dann wird im Justierschritt der Spiegel so umgestellt, dass die Winkelunterschiede zwischen den Spiegelsegmenten 15 und den Spiegelsegmenten 16 vorliegen. Mit anderen Worten, die Winkeldivergenz zwischen den optischen Achsen OA1 und OA2 tritt auf, und die Teilbilder 12 und 13 liegen nebeneinander. Der dadurch bewirkte Unterschied in den Koordinaten zwischen den Teilbildern 12 und 13 ist aus den Spiegelparametern einfach abzuleiten, so dass durch die vorher erreichte Justierung im superpositionierten Zustand eine hochpräzise Relativreferenzierung zwischen den Teilbildern 12 und 13 gewährleistet ist.

Natürlich können die oben erwähnten Verfahrensschritte 1 und 2, die vor dem eigentlichen Messprinzip zur Justierung ausgeführt werden, auch in beliebiger Reihenfolge bzw. kombiniert angewendet werden.

## Patentansprüche

1. Verfahren zur hochauflösenden 3D-Fluoreszenzmikroskopie, wobei
- in einer Probe (2) wiederholt Fluoreszenzemitter zur Abgabe von Fluoreszenzstrahlung angeregt und von der Probe (2) mit einem Mikroskop (1), das einen Abbildungsstrahlengang (4) mit einer optischen Auflösung und eine Fokalebene aufweist, Einzelbilder (10) erzeugt werden, wobei die Fluoreszenzemitter derart zur Abgabe von Fluoreszenzstrahlung angeregt werden, daß zumindest eine Teilmenge der Fluoreszenzemitter in jedem Einzelbild (10) derart isoliert ist, so daß die Bilder (11) dieser Fluoreszenzemitter im Rahmen der optischen Auflösung in den Einzelbildern (10) trennbar sind,
- in den erzeugten Einzelbildern (10) aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird,
- jedes Einzelbild mittels eines Teilerelements (7) in ein erstes und ein zweites Teilbild (12, 13) aufgeteilt wird, wobei das erste Teilbild (12) eine erste Fokalebene in der Probe (2) und das zweite Teilbild (13) eine zweite Fokalebene in der Probe (2) abbildet,
- beide Teilbilder (12, 13) getrennt abgebildet werden,
**dadurch gekennzeichnet, daß**
- als Teilerelement ein adaptiver Spiegel (7) verwendet und im wesentlichen in einer Pupille des Abbildungsstrahlengangs (4) angeordnet wird,
- der adaptive Spiegel (7) so eingestellt wird, daß er die zwei Teilbilder (12, 13) örtlich getrennt abbildet,
- der adaptive Spiegel (7) so eingestellt wird, daß er zwei unterschiedliche Fokuslängen für die beiden Teilbilder (12, 13) realisiert, und
- der adaptive Spiegel (7) die zwei Teilbilder (12, 13) entlang divergierender optischer Achsen (OA1, OA2) auf nebeneinanderliegende Bildaufnahmebereiche (Ka, Kb) abbildet..

2. Verfahren nach Anspruch 1, **dadurch gekennzeichnet, daß** ein Intensitätsverhältnis der Teilbilder (12, 13) verstellt wird, indem Spiegelflächenanteile (15) des adaptiven Spiegels (7), die die Abbildung des ersten Teilbildes (12) bewirken, verkleinert und um dieses Maß Spiegelflächenanteile (16) des adaptiven Spiegels (7), die die Abbildung des zweiten Teilbildes (13) bewirken, vergrößert werden.

3. Verfahren nach Anspruch 1 oder 2, **dadurch gekennzeichnet, daß** zum Einstellen einer Tiefenauflösung oder eines erfaßten Tiefenbereiches durch Verstellung des adaptiven Spiegels (7) eine Differenz der Fokuslängen verändert wird.

4. Verfahren nach einem der obigen Ansprüche, **dadurch gekennzeichnet, daß** am Spiegel (7) reflektierte Strahlung mit einem Wellenfrontsensor (9) erfaßt wird und der Spiegel (7) zur Korrektur von Abbildungsfehlern des Abbildungsstrahlenganges (4) verstellt wird.

5. Verfahren nach einem der obigen Ansprüche, **dadurch gekennzeichnet, daß** für eine Tiefenlagenverstellung die beiden Fokuslängen synchron verstellt werden.

6. Verfahren nach einem der obigen Ansprüche, **dadurch gekennzeichnet, daß** vor der tiefenauflösenden Mikroskopie in einem Justierschritt der Teilbilder (12, 13) diese zuerst mit gleicher Fokuslänge erzeugt und in diesem Zustand lagejustiert werden.

7. Verfahren nach einem der obigen Ansprüche, **dadurch gekennzeichnet, daß** die beiden Bildaufnahmebereiche (Ka, Kb) auf einer Kamera (K) liegen und vor der tiefenauflösenden Mikroskopie in einem Justierschritt die beiden Teilbilder (12, 13) zuerst superpositioniert auf die Kamera (K) abgebildet und in diesem Zustand lagejustiert werden und dann der Spiegel (7) so verstellt wird, daß die Teilbilder (12, 13) nebeneinander auf den Bildaufnahmebereichen (Ka, Kb) zu liegen kommen.

8. Fluoreszenzmikroskop zum dreidimensionalen Abbilden einer Probe (2) mit einer über eine optische Auflösung gesteigerten Ortsauflösung, das aufweist:
- eine Beleuchtungseinrichtung (L1, 3, 5), die dazu ausgebildet ist, in der Probe (2) wiederholt Fluoreszenzemitter zur Abgabe von Fluoreszenzstrahlung anzuregen
- eine einen Abbildungsstrahlengang (4) mit der optischen Auflösung umfassende Abbildungseinrichtung (5, 4, K), die dazu ausgebildet ist, von der Probe (2) mit der optischen Auflösung Einzelbilder zu erzeugen,
- eine Steuereinrichtung (C), die dazu ausgebildet ist, die Beleuchtungseinrichtung (L1, 3, 5) und die Abbildungseinrichtung (5, 4, K) so anzusteuern, daß von der Probe (2) mehrere Einzelbilder erzeugt werden, wobei die Fluoreszenzemitter derart zur Abgabe von Fluoreszenzstrahlung angeregt sind, daß zumindest eine Teilmenge der Fluoreszenzemitter in jedem Einzelbild derart isoliert ist, daß die Bilder dieser Fluoreszenzemitter im Rahmen der optischen Auflösung in den Einzelbildern trennbar sind, wobei
- die Steuereinrichtung (C) dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen,
- der Abbildungsstrahlengang (4) ein Teilerelement (7) aufweist, das jedes Einzelbild in ein erstes und ein zweites Teilbild (12, 13) aufteilt, wobei das erste Teilbild (12) eine erste Fokalebene in der Probe (2) und das zweite Teilbild (13) eine zweite Fokalebene in der Probe (2) abbildet,
- die Abbildungseinrichtung (5, 4, K) mindestens eine Kamera (K) umfaßt, auf die beide Teilbilder (12, 13) nebeneinander abgebildet sind,
**dadurch gekennzeichnet, daß**
- das Teilerelement als adaptiver Spiegel (7) ausgebildet ist, der im wesentlichen in einer Pupille des Abbildungsstrahlengangs (4) angeordnet ist,
- die Steuereinrichtung (C) dazu ausgebildet ist, den adaptiven Spiegel (7) so einzustellen, daß er die zwei Teilbilder (12,13) örtlich getrennt abbildet,
- die Steuereinrichtung (C) dazu ausgebildet ist, den adaptiven Spiegel (7) so einzustellen, daß er zwei unterschiedliche Fokuslängen für die beiden Teilbilder (12, 13) realisiert, und
- die Steuereinrichtung (C) dazu ausgebildet ist, den adaptiven Spiegel (7) so anzusteuern, daß er die zwei Teilbilder (12, 13) entlang divergierender optischer Achsen (OA1, OA2) auf nebeneinanderliegende Bildaufnahmebereiche (Ka, Kb) auf der Kamera (K) abbildet.

9. Fluoreszenzmikroskop nach Anspruch 8, **dadurch gekennzeichnet, daß** zur Verstellung eines Intensitätsverhältnis der Teilbilder (12, 13) die Steuereinrichtung (C) dazu ausgebildet ist, den adaptiven Spiegel (7) so einzustellen, daß Spiegelflächenanteile (15) des adaptiven Spiegels (7), die die Abbildung des ersten Teilbildes (12) bewirken, abnehmen und um dieses Maß Spiegelflächenanteile (16) des adaptiven Spiegels (7), die die Abbildung des zweiten Teilbildes (13) bewirken, zunehmen.

10. Fluoreszenzmikroskop nach Anspruch 8 oder 9, **dadurch gekennzeichnet, daß** zum Einstellen einer Tiefenauflösung oder eines erfaßten Tiefenbereiches die Steuereinrichtung (C) dazu ausgebildet ist, den adaptiven Spiegel (7) so einzustellen, daß eine Differenz der Fokuslängen verändert wird.

11. Fluoreszenzmikroskop nach einem der Ansprüche 8 bis 10, **dadurch gekennzeichnet, daß** ein Wellenfrontsensor (9) vorgesehen ist, der am Spiegel (7) reflektierte Strahlung erfaßt, um den Spiegel (7) zur Korrektur von Abbildungsfehlern des Abbildungsstrahlenganges (4) zu verstellen.

12. Fluoreszenzmikroskop nach einem der Ansprüche 8 bis 11, **dadurch gekennzeichnet, daß** die Steuereinrichtung (C) dazu ausgebildet ist, für eine Tiefenlagenverstellung die beiden Fokuslängen synchron zu verstellen.

13. Fluoreszenzmikroskop nach einem der Ansprüche 8 bis 12, **dadurch gekennzeichnet, daß** die Steuereinrichtung (C) dazu ausgebildet ist, zur Justierung vor der tiefenauflösenden Abbildung den Spiegel (7) so anzusteuern, daß die Teilbilder (12, 13) zuerst mit gleicher Fokuslänge erzeugt sind, und in diesem Zustand ein Lagejustiersignal erzeugt.

14. Fluoreszenzmikroskop nach einem der Ansprüche 8 bis 13, **dadurch gekennzeichnet, daß** die Bildaufnahmebereiche (Ka, Kb) von einer Kamera (K) bereitgestellt sind und die Steuereinrichtung (C) dazu ausgebildet ist, zur Justierung vor der tiefenauflösenden Abmessung den Spiegel (7) so anzusteuern, daß die Teilbilder (12, 13) superpositioniert auf die Kamera (K) abgebildet sind, in diesem Zustand ein Lagejustiersignal erzeugt und dann den Spiegel so verstellt, daß die Teilbilder (12, 13) nebeneinander auf die Bildaufnahmebereiche (Ka, Kb) abgebildet sind.

## Claims

1. Method for super-resolution 3D fluorescence microscopy, wherein
- fluorescence emitters for emitting fluorescence radiation in a sample (2) are repeatedly excited and individual images (10) are generated from the sample (2) using a microscope (1) that has an imaging beam path (4) with an optical resolution and a focal plane, wherein the fluorescence emitters are excited to emit fluorescence radiation such that at least a subset of the fluorescence emitters in each individual image (10) is isolated such that the images (11) of said fluorescence emitters are separable within the scope of the optical resolution in the individual images (10),
- the locations of said fluorescence emitters are localized in the generated individual images (10) from the images of the isolated fluorescence emitters with a spatial accuracy that goes beyond an optical resolution, and a super-resolved total image is generated therefrom,
- each individual image is split, using a splitter element (7) into a first and a second partial image (12, 13), wherein the first partial image (12) images a first focal plane in the sample (2) and the second partial image (13) images a second focal plane in the sample (2),
- both partial images (12, 13) are imaged separately,
**characterized in that**
- an adaptive mirror (7) is used as the splitter element and is mounted substantially in a pupil of the imaging beam path (4),
- the adaptive mirror (7) is set such that it images the two partial images (12, 13) in a spatially separated fashion,
- the adaptive mirror (7) is set such that it implements two different focal lengths for the two partial images (12, 13), and
- the adaptive mirror (7) images the two partial images (12, 13) along diverging optical axes (OA1, OA2) onto adjacent image recording regions (Ka, Kb).

2. Method according to Claim 1, **characterized in that** an intensity ratio of the partial images (12, 13) is altered by reducing mirror surface portions (15) of the adaptive mirror (7) that effect the imaging of the first partial image (12) and increasing by this extent mirror surface portions (16) of the adaptive mirror (7) that effect the imaging of the second partial image (13) .

3. Method according to Claim 1 or 2, **characterized in that** a difference of the focal lengths is changed to set a depth resolution or a captured depth region by altering the adaptive mirror (7).

4. Method according to one of the preceding claims, **characterized in that** radiation that is reflected at the mirror (7) is captured with a wavefront sensor (9) and the mirror (7) is altered to correct imaging errors of the imaging beam path (4).

5. Method according to one of the preceding claims, **characterized in that** the two focal lengths are altered synchronously for a depth location alteration.

6. Method according to one of the preceding claims, **characterized in that**, in an adjustment step of the partial images (12, 13), said partial images are first generated with the same focal length and are adjusted in terms of location in this state before the depth-resolving microscopy.

7. Method according to one of the preceding claims, **characterized in that** the two image recording regions (Ka, Kb) are situated on a camera (K) and, before the depth-resolving microscopy in an adjustment step, the two partial images (12, 13) are first imaged onto the camera (K) in superposed fashion and are adjusted in terms of location in this state, and then the mirror (7) is altered such that the partial images (12, 13) come to lie next to one another on the image recording regions (Ka, Kb).

8. Fluorescence microscope for three-dimensional imaging of a sample (2) with a spatial resolution that is increased with respect to an optical resolution, having:
- an illumination device (L1, 3, 5) which is configured to repeatedly excite fluorescence emitters in the sample (2) to emit fluorescence radiation,
- an imaging device (5, 4, K) comprising an imaging beam path (4) with the optical resolution, which imaging device is configured to generate individual images of the sample (2) with the optical resolution,
- a control device (C), which is configured to actuate the illumination device (L1, 3, 5) and the imaging device (5, 4, K) such that a plurality of individual images of the sample (2) are generated, wherein the fluorescence emitters are excited to emit fluorescence radiation such that at least a subset of the fluorescence emitters in each individual image is isolated such that the images of these fluorescence emitters are separable within the scope of the optical resolution in the individual images, wherein
- the control device (C) is configured to localize in the generated individual images the locations of the fluorescence emitters, which fluoresce in isolated fashion, with a spatial accuracy that goes beyond an optical resolution and to generate therefrom a super-resolved total image,
- the imaging beam path (4) has a splitter element (7) which splits each individual image into a first and a second partial image (12, 13), wherein the first partial image (12) images a first focal plane in the sample (2) and the second partial image (13) images a second focal plane in the sample (2),
- the imaging device (5, 4, K) comprises at least one camera (K) onto which both partial images (12, 13) are imaged next to one another,
**characterized in that**
- the splitter element is configured as an adaptive mirror (7) which is mounted substantially in a pupil of the imaging beam path (4),
- The control device (c) is configured to set the adaptive mirror (7) such that it images the two partial images (12,13) in a spatially separated fashion,
- the control device (C) is configured to set the adaptive mirror (7) such that it implements two different focal lengths for the two partial images (12, 13), and
- the control device (C) is configured to actuate the adaptive mirror (7) such that it images the two partial images (12, 13) along diverging optical axes (OA1, OA2) onto adjacent image recording regions (Ka, Kb) on the camera (K).

9. Fluorescence microscope according to Claim 8, **characterized in that** the control device (C) is configured, for the alteration of an intensity ratio of the partial images (12, 13), to set the adaptive mirror (7) such that mirror surface portions (15) of the adaptive mirror (7) that effect the imaging of the first partial image (12) reduce and mirror surface portions (16) of the adaptive mirror (7) that effect the imaging of the second partial image (13) increase by this extent.

10. Fluorescence microscope according to Claim 8 or 9, **characterized in that**, for setting a depth resolution or a captured depth region, the control device (C) is configured to set the adaptive mirror (7) such that a difference of the focal lengths is changed.

11. Fluorescence microscope according to one of Claims 8 to 10, **characterized in that** a wavefront sensor (9) is provided which captures radiation that is reflected at the mirror (7) in order to alter the mirror (7) to correct imaging errors of the imaging beam path (4).

12. Fluorescence microscope according to one of Claims 8 to 11, **characterized in that** the control device (C) is configured to alter the two focal lengths synchronously for a depth location alteration.

13. Fluorescence microscope according to one of Claims 8 to 12, **characterized in that** the control device (C) is configured to actuate, for the adjustment before the depth-resolving imaging, the mirror (7) such that the partial images (12, 13) are first generated with the same focal length, and generates in this state a location adjustment signal.

14. Fluorescence microscope according to one of Claims 8 to 13, **characterized in that** the image recording regions (Ka, Kb) are provided by a camera (K) and the control device (C) is configured to actuate, for adjustment before the depth-resolving measurement, the mirror (7) such that the partial images (12, 13) are imaged onto the camera (K) in superposed fashion, generates in this state a location adjustment signal and then alters the mirror such that the partial images (12, 13) are imaged next to one another onto the image recording regions (Ka, Kb).

## Revendications

1. Procédé de microscopie de fluorescence 3D à haute résolution, selon lequel
- dans un échantillon (2), des émetteurs de fluorescence sont excités de manière répétitive en vue de délivrer un rayonnement fluorescent et des images individuelles (10) de l'échantillon (2) sont générées avec un microscope (1) qui possède un trajet de rayon de représentation (4) ayant une résolution optique et un plan focal, les émetteurs de fluorescence étant excités pour délivrer un rayonnement fluorescent de telle sorte qu'au moins une quantité partielle des émetteurs de fluorescence dans chaque image individuelle (10) est isolée de manière à ce que les images (11) de ces émetteurs de fluorescence puissent être séparées en les images individuelles (10) dans le cadre de la résolution optique,
- dans les images individuelles (10) générées, les positions des émetteurs de fluorescence isolés sont localisées à partir des images de ces émetteurs de fluorescence avec une précision locale allant au-delà d'une résolution optique et une image globale à haute résolution est générée à partir de celles-ci,
- chaque image individuelle est divisée en une première et une deuxième image partielle (12, 13) par l'intermédiaire d'un élément diviseur (7), la première image partielle (12) représentant un premier plan focal dans l'échantillon (2) et la deuxième image partielle (13) représentant un deuxième plan focal dans l'échantillon (2),
- les deux images partielles (12, 13) sont représentées séparément,
**caractérisé en ce que**
- un miroir adaptatif (7) est utilisé comme élément diviseur et est disposé sensiblement dans une pupille du trajet de rayon de représentation (4),
- le miroir adaptatif (7) est réglé de telle sorte qu'il représente les deux images partielles (12, 13) localement séparées,
- le miroir adaptatif (7) est réglé de telle sorte qu'il réalise deux longueurs focales différentes pour les deux images partielles (12, 13), et
- le miroir adaptatif (7) représente les deux images partielles (12, 13) le long d'axes optiques divergents (OA1, OA2) sur des zones d'enregistrement d'image (Ka, Kb) juxtaposées.

2. Procédé selon la revendication 1, **caractérisé en ce qu'**un rapport d'intensité des images partielles (12, 13) est modifié **en ce que** les parts de surface réfléchissante (15) du miroir adaptatif (7) qui produisent la représentation de la première image partielle (12) sont réduites et les parts de surface réfléchissante (16) du miroir adaptatif (7) qui produisent la représentation de la deuxième image partielle (13) sont agrandies de la même mesure.

3. Procédé selon la revendication 1 ou 2, **caractérisé en ce qu'**une différence des longueurs focales est modifiée par une mise au point du miroir adaptatif (7) en vue de régler une résolution de profondeur ou une plage de profondeurs détectée.

4. Procédé selon l'une des revendications précédentes, **caractérisé en ce que** le rayonnement réfléchi sur le miroir (7) est détecté avec un capteur de front d'onde (9) et le miroir (7) est mis au point en vue de corriger les erreurs de représentation du trajet de rayon de représentation (4).

5. Procédé selon l'une des revendications précédentes, **caractérisé en ce que** les deux longueurs focales sont mises au point de manière synchrone pour une mise au point de la position de profondeur.

6. Procédé selon l'une des revendications précédentes, **caractérisé en ce qu'**avant la microscopie avec résolution de profondeur, dans une étape d'ajustement des images partielles (12, 13), celles-ci sont tout d'abord générées avec la même longueur focale et l'ajustement de leur position est effectué dans cet état.

7. Procédé selon l'une des revendications précédentes, **caractérisé en ce que** les deux zones d'enregistrement d'image (Ka, Kb) se trouvent sur un appareil photographique (K) et avant la microscopie avec résolution de profondeur, dans une étape d'ajustement, les images partielles (12, 13) sont tout d'abord représentées superposées sur l'appareil photographique (K) et l'ajustement de leur position est effectué dans cet état, puis le miroir (7) est ensuite mis au point de telle sorte que les images partielles (12, 13) se retrouvent l'une à côté de l'autre sur les zones d'enregistrement d'image (Ka, Kb).

8. Microscope à fluorescence destiné à la représentation tridimensionnelle d'un échantillon (2) avec une précision locale rendue supérieure à une résolution optique, lequel possède :
- un dispositif d'éclairage (L1, 3, 5) qui est configuré pour exciter de manière répétitive dans l'échantillon (2) des émetteurs de fluorescence en vue de délivrer un rayonnement fluorescent,
- un dispositif de représentation (5, 4, K) comprenant un trajet de rayon de représentation (4) ayant la résolution optique, lequel est configuré pour générer des images individuelles de l'échantillon (2) avec la résolution optique,
- un dispositif de commande (C) qui est configuré pour commander le dispositif d'éclairage (L1, 3, 5) et le dispositif de représentation (5, 4, K) de manière à générer plusieurs images individuelles de l'échantillon (2), les émetteurs de fluorescence étant excités pour délivrer un rayonnement fluorescent de telle sorte qu'au moins une quantité partielle des émetteurs de fluorescence dans chaque image individuelle est isolée de manière à ce que les images de ces émetteurs de fluorescence puissent être séparées en les images individuelles dans le cadre de la résolution optique,
- le dispositif de commande (C) étant configuré pour localiser, dans les images individuelles générées, les positions des émetteurs de fluorescence isolés avec une précision locale allant au-delà d'une résolution optique et pour générer une image globale à haute résolution à partir de celles-ci,
- le trajet de rayon de représentation (4) possédant un élément diviseur (7) qui divise chaque image individuelle en une première et une deuxième image partielle (12, 13), la première image partielle (12) représentant un premier plan focal dans l'échantillon (2) et la deuxième image partielle (13) représentant un deuxième plan focal dans l'échantillon (2),
- le dispositif de représentation (5, 4, K) comprenant au moins un appareil photographique (K) sur lequel les deux images partielles (12, 13) sont représentées l'une à côté de l'autre,
**caractérisé en ce que**
- l'élément diviseur est réalisé sous la forme d'un miroir adaptatif (7) qui est disposé sensiblement dans une pupille du trajet de rayon de représentation (4),
- le dispositif de commande (C) est configuré pour régler le miroir adaptatif (7) de telle sorte qu'il représente les deux images partielles (12, 13) localement séparées,
- le dispositif de commande (C) est configuré pour régler le miroir adaptatif (7) de telle sorte qu'il réalise deux longueurs focales différentes pour les deux images partielles (12, 13), et
- le dispositif de commande (C) est configuré pour commander le miroir adaptatif (7) de telle sorte qu'il représente les deux images partielles (12, 13) le long d'axes optiques divergents (OA1, OA2) sur des zones d'enregistrement d'image (Ka, Kb) juxtaposées sur l'appareil photographique (K).

9. Microscope à fluorescence selon la revendication 8, **caractérisé en ce que** pour la modification d'un rapport d'intensité des images partielles (12, 13), le dispositif de commande (C) est configuré pour régler le miroir adaptatif (7) de telle sorte que les parts de surface réfléchissante (15) du miroir adaptatif (7) qui produisent la représentation de la première image partielle (12) diminuent et les parts de surface réfléchissante (16) du miroir adaptatif (7) qui produisent la représentation de la deuxième image partielle (13) augmentent de la même mesure.

10. Microscope à fluorescence selon la revendication 8 ou 9, **caractérisé en ce que** pour régler une résolution de profondeur ou une plage de profondeurs détectée, le dispositif de commande (C) est configuré pour régler le miroir adaptatif (7) de telle sorte qu'une différence des longueurs focales est modifiée.

11. Microscope à fluorescence selon l'une des revendications 8 à 10, **caractérisé en ce qu'**il existe un capteur de front d'onde (9) qui détecte le rayonnement réfléchi sur le miroir (7) afin de mettre au point le miroir (7) en vue de corriger les erreurs de représentation du trajet de rayon de représentation (4).

12. Microscope à fluorescence selon l'une des revendications 8 à 11, **caractérisé en ce que** le dispositif de commande (C) est configuré pour mettre au point les deux longueurs focales de manière synchrone pour une mise au point de la position de profondeur.

13. Microscope à fluorescence selon l'une des revendications 8 à 12, **caractérisé en ce que** le dispositif de commande (C) est configuré pour, avant la représentation avec résolution de profondeur, commander le miroir (7) en vue de l'ajustement de telle sorte que les images partielles (12, 13) sont tout d'abord générées avec la même longueur focale et générer un signal d'ajustement de la position dans cet état.

14. Microscope à fluorescence selon l'une des revendications 8 à 13, **caractérisé en ce que** les zones d'enregistrement d'image (Ka, Kb) sont fournies par un appareil photographique (K) et le dispositif de commande (C) est configuré pour, avant la représentation avec résolution de profondeur, commander le miroir (7) en vue de l'ajustement de telle sorte que les images partielles (12, 13) sont représentées superposées sur l'appareil photographique (K), générer un signal d'ajustement de la position dans cet état et effectuer ensuite la mise au point du miroir de telle sorte que les images partielles (12, 13) sont représentées l'une à côté de l'autre sur les zones d'enregistrement d'image (Ka, Kb).
